# EUROPEAN PATENT APPLICATION

(11) **EP 0 972 806 A1**
(43) Date of publication of application: **19.01.2000**
(21) Application number: 99113756.3
(22) Date of filing: 14.07.1999
(51) Int. Cl.: C08L 97/02, C08L 101/00

(54) **Molded article having antibacterial activity**

(30) Priority: 15.07.1998 JP 20039898; 16.06.1999 JP 16996899
(71) Applicant: Imaizumi, Yutaka, Abiko-shi Chiba (JP)
(72) Inventor: Imaizumi, Yutaka, Abiko-shi Chiba (JP)
(74) Representative: Luderschmidt, Schüler & Partner GbR

(57) **Abstract**

To provide a molded article made of a non-halogenated thermoplastic resin composition, which has an antibacterial activity and high stiffness, and which does not cause evolution of an acidic gas and damage of an incinerator due to a combustion calorie even if it is incinerated, and hardly produces an incineration residue.

According to the present invention, there is provided a molded article having an antibacterial activity, characterized in that said molded article is obtained by thermoforming a composition comprising a non-halogenated thermoplastic resin and a bamboo powder, said bamboo powder being contained in an amount of 20 to 80% by weight, using a molding method such as injection molding, extrusion molding or calender molding, or vacuum, air-pressure or press forming of a sheet, said molded article being useful in the applications fields such as light electrical parts, automotive parts, building materials and kitchenwares.

## Description

### Background of the Invention

### a) Field of the Invention

The present invention relates to a molded article having an antibacterial activity, which is obtained by molding a composition comprising a non-halogenated thermoplastic resin and a specific amount of a finely powdered bamboo, e.g. molded article such as light electrical parts and building material.

### b) Description of the Related Art

Plastics are now used in every field in our surroundings and are indispensable for our life. Also, plastics are provided with various functions because of diversification of user's needs.

An antibacterial activity is one of them and various organic and inorganic antibacterial agents have been developed. Thus, the antibacterial agent is blended in plastics or coated on the surface of plastic molded articles and it begins to apply the resulting products in various fields such as appliance parts, automotive parts, kitchenwares, stationary products, toiletry goods, amenity goods, building materials and the like. However, these antibacterial agents are generally expensive to cause an increase in cost of the material and, therefore, they are not widespread at present because of limitation of use.

Although disused plastic products are partially recovered and used effectively, almost all of them are buried or incinerated in the same manner as in the case of general wastes. Plastics can cause damage of an incinerator because of high combustion heat on burning, while plastics containing a halogen element such as chlorine evolves an acidic gas such as hydrogen chloride on burning. Furthermore, plastics containing a large amount of inorganic fillers or glass fibers cause such a problem that the inorganic fillers or glass fibers are converted into an incineration residue as a waste on incineration.

To reduce a combustion calorie as a problem caused by use of a polyolefin material, which does not evolve a harmful gas, a material containing a large amount of an organic matter such as woodmeal, bran, chaff, etc. is used. However, according to such a method, the combustion calorie can be reduced, but the material is burned by heat to cause brown discoloration or burnt smell in the case of mixing the organic matter and the resin with melting or producing a molded article by melt-molding. When producing the molded article by the injection molding method, there arises a problem that a mold is contaminated with a volatile component from an organic matter or the volatile component is accumulated in an air vent to cause insufficient degassing. When using in a food container, the component contained in the organic filler begin to elute to cause a problem.

As a method of obtaining a composite resin composition, which exhibits low volatility and low fuming on molding such as injection molding, compression molding, etc. and is optimum for use as a lacquered ware ground having excellent quality, there has been known a method of producing a composite resin composition comprising (i) a thermoplastic resin, (ii) a bamboo powder and (iii) a basic filler such as magnesium oxide, wherein the amount of (ii) is from 5 to 80 parts by weight based on 100 parts by weight of the total amount of (i) and (ii) while the amount of (iii) is from 5 to 80 parts by weight based on 100 parts by weight of (ii) (see Japanese Patent Kokai Publication No. 134361/1996).

### Objects and Summary of the Invention

An object of the present invention is to provide a molded article made of a non-halogenated thermoplastic resin composition, which has an antibacterial activity and high stiffness, and which does not cause evolution of an acidic gas and damage of an incinerator due to a combustion calorie even if it is incinerated, and hardly produces an incineration residue. Another object of the present invention is to provide a non-halogenated thermoplastic resin composition having excellent moldability, thereby facilitating to produce a molded article having an antibacterial activity.

In light of the above circumstances of the prior art, the present inventors have found, surprisingly, in the study process of waste disposal of plastic products that a molded article made of a composition comprising a finely powdered bamboo and a non-halogenated thermoplastic resin composition attains the above objects, thus accomplishing the present invention.

That is, the present invention provides a molded article having an antibacterial activity, characterized in that said molded article is obtained by thermoforming a composition comprising a non-halogenated thermoplastic resin and a bamboo powder, said bamboo powder being contained in an amount of 20 to 80% by weight.

In the present invention described above, the thermoforming of the composition is preferably injection molding, extrusion molding or calender molding, or vacuum, air-pressure or press forming of a sheet-like product obtained by extrusion or calender molding.

A more remarkable effect is recognized in the case where the molded article of the present invention described above includes light electrical parts and the molded article thereof includes an air-conditioner fan, cleaner air plenum parts or refrigerator vegetable chamber parts.

A more remarkable effect is recognized in the case where the molded article includes automotive parts and molded article thereof includes an air-conditioner fan, air-conditioner duct or air plenum parts.

A more remarkable effect is recognized in the case where the molded article is a building material.

A more remarkable effect is recognized in the case where the molded article is a tray for foods, cup, lunch box or lid thereof.

A more remarkable effect is recognized in the case where the molded article is a kitchenware and the molded article thereof is a toiletry good, or a grip or handle of a cookware.

A more remarkable effect is recognized in the case where the molded article is a comb, a grip of shaver or toothbrush.

A more remarkable effect is recognized in the case where the molded article is a grip of a surgical knife.

A more remarkable effect is recognized in the case where the molded article is an extruded sheet or plate, or a vacuum or air-pressure formed article thereof.

A more remarkable effect is recognized in the case where the molded article is a calendered plate, or a vacuum or air-pressure formed article thereof.

A more remarkable effect is also recognized in the case where the molded article is a plate for display or tray.

In the present invention described above, the bamboo powder preferably has an average particle diameter within a range from 5 to 500 µm.

The bamboo powder, which constitutes the composition comprising the non-halogenated thermoplastic resin and the bamboo powder, said bamboo powder being contained in the amount of 20 to 80% by weight, is preferably a bamboo powder treated with hot water at 50°C or higher in such a respect that it facilitates to mold the composition and to improve the quality of the resulting molded article.

It is more preferred that the bamboo constituting the composition is obtained by treating with hot water at 50°C or higher and drying until the content of water is reduced to 2% by weight or lower.

The non-halogenated thermoplastic resin is preferably polypropylene, polyethylene, ABS resin, AS resin or polylactic acid.

In order to make it easy to produce the above molded article having an antibacterial activity, the present invention also provides a mixed composition comprising 20 to 80% by weight of a bamboo powder having an average particle diameter of 5 to 500 µm, obtained by treating with hot water at 50°C or higher and drying until the content of water is reduced to 2% by weight or lower, and 80 to 20% by weight of a non-halogenated thermoplastic resin.

The present invention also provides a method of producing a molded article having an antibacterial activity, which comprises thermoforming a composition comprising a non-halogenated thermoplastic resin and a bamboo powder, said bamboo powder being contained in the amount of 20 to 80% by weight.

The molded article of the present invention has an antibacterial activity, and also has high stiffness because of a bamboo powder contained therein. Since shrinkage on molding is small and drawbacks on molding such as sinking are improved, like a molded article made of a thermoplastic resin composition containing a large amount of inorganic fillers such as glass fibers, calcium carbonate, talc and the like. Therefore, the molded article of the present invention is useful as building materials, container, tray, grip of comb, shaver or toothbrush. It is also useful as a lunchbox, container or tray for foods because of its antibacterial activity.

Since a non-halogenated resin is used in the molded article of the present invention, an acidic gas is not evolved when the molded article is burned. The lager amount of finely powdered bamboo to be added in the molded article of the present invention reduces the combustion calorie, resulting in no damage of an incinerator. It is also suited for disposable or thermally disposable use because an incineration residue is hardly produced.

As the bamboo powder used in the present invention, there can be used shavings produced on making a bamboo work such as bamboo chopsticks, and wastes such as node portions which can not be used. Also, the amount of the resin to be used can be reduced by mixing with the bamboo powder. Therefore, the present invention is effective for resource saving and energy saving.

When using the bamboo powder prepared by previously treating with hot water at 50°C or higher, filtering and drying until the content of water is reduced to 2% by weight or lower in the present invention, it becomes more easy to produce the molded article using various molding methods, resulting in molded article having more preferred physical properties.

Furthermore, the resin composition containing not less than 45% by weight of the bamboo powder is suited for use as a building material and a grip of domestic fireworks for children, because the grip made from the composition does not drip flaming particles when it is incinerated, and is converted into ash. A biodegradable resin is preferably used even in the case where it is not burned, because the biodegradable resin is degraded by microorganism to fall back to dust.

### Detailed Description of the Invention

The non-halogenated thermoplastic resin used generally in the present invention is a resin other than a thermoplastic resin containing a halogen element such as chlorine and fluorine (e.g. polyvinyl chloride resin, fluororesin, etc., and examples thereof includes polyethylene, polypropylene, polystyrene, high-impact polystyrene, AS resin, ABS resin, polyacrylonitrile resin, etc.; low-molecular substance of the above resin, such as polyethylene wax, polypropylene wax, etc.; elastomer such as ethylene-propylene rubber-like copolymer, polybutadiene, styrene-butadiene rubber-like copolymer, polybutene, etc.; and biodegradable resin such as polylactic acid, polycaprolactone, polyhydroxybutyrate, etc.

However, it is not limited thereto as far as it is a resin containing no halogen element.

It may also be a mixture of two or more kinds of these resins.

The term "biodegradable resin" used in the present invention refers to a thermoplastic resin capable of being decomposed into water and a carbon dioxide gas by means of microorganism. Even if the molded article thereof is discarded or buried in fields and mountains, it is degraded, which is preferred.

The bamboo powder used in the present invention may be those obtained by finely grinding any of thick-stemmed bamboo and long-jointed bamboo. However, the average particle diameter of the bamboo powder is preferably within a range from 5 to 500 µm. The particle diameter smaller than 5 µm is liable to cause scattering because of small bulk density, resulting in difficult handling. Also, classification occurs on mixing with the non-halogenated thermoplastic resin, which is not preferred. On the other hand, the particle diameter larger than 500 µm causes poor surface state of the molded article, resulting in disadvantages according to the production purpose of the molded article, which is not preferred.

The above bamboo powder is usually obtained by finely grinding bamboo wastes formed on production of bamboo products.

The amount of the bamboo powder contained in the composition of the present invention is from 20 to 80% by weight, and preferably from 30 to 70% by weight, based on the total amount of the non-halogenated thermoplastic resin and finely powdered bamboo. The amount smaller than 20% by weight gives poor antibacterial activity, which is not preferred. On the other hand, the amount larger than 80% by weight gives poor moldability, which is not preferred.

When the amount of the non-halogenated thermoplastic resin in the composition is from 50 to 80% by weight, it is possible to effectively utilize a feature of a molded article as a resin product. When amount of the bamboo powder is from 50 to 80% by weight, it is possible to effectively utilize a feature of a molded article as a bamboo product.

The composition of the non-halogenated thermoplastic resin and bamboo powder can be obtained by mixing both of the non-halogenated thermoplastic resin and bamboo powder, optionally together with antioxidants and colorants, with stirring using a Henschel mixer or the like, and usually melt extruding into pellets using an extruder, but may also be obtained by extruding as it is without being formed into pellets. The composition may be molten and granulated on mixing using a Henschel mixer. Furthermore, both of the non-halogenated thermoplastic resin and bamboo powder may be molten and kneaded by using a heated roll to form a sheet, which is then granulated by cutting.

When using the powdered non-halogenated thermoplastic resin, the dispersion of the bamboo powder is improved, which is preferred.

The composition used in the present invention may contain antioxidants, ultraviolet absorbers, antistatic agents, lubricants, coloring dyes, pigments, and a small amount of other resins and inorganic fillers.

The composition of the present invention is suitable for injection molding because of small molding shrinkage factor as well as less sink and warpage. The composition can also be molded by a general extrusion molding method, and a molded article can be obtained by the molding method. It is also possible to obtain a molded article by vacuum or air-pressure forming using a sheet obtained by the extrusion molding. Calendering can also be conducted and a thick plate can be obtained by hot plate pressing a plurality of superposed calendered thin sheets. Furthermore, a foamed product can be obtained by foaming injection molding or foaming extrusion molding, using conventional chemical foaming agents or physical foaming agents such as Freon, butane, carbon dioxide gas, nitrogen gas, etc.

A molding composition is prepared by using thick-stemmed bamboo and long-jointed bamboo as it is as finely powdered bamboo used in the production of the molded article having an antibacterial activity of the present invention, and mixing the bamboo powder with the non-halogenated thermoplastic resin, thereby making it possible to utilize its characteristics as the molded article having an antibacterial activity.

However, the present inventors have intensively studied about the method, which can be applied to various molding methods described above and improve the chemical and physical properties of the resulting molded article, and found that the molding can be further stabilized and physical properties of the resulting product can be further improved by employing the technique described below.

Such a preferred method includes, for example, a method of treating those, obtained by finely grinding bamboo wastes produced on production of bamboo products using a ball mill, with hot water at a temperature of not less than 50°C and using the resultant bamboo powder. When employing a comparatively low temperature of not less than 50°C, it is necessary to increase the washing time and to sufficiently treat the bamboo powder. On the other hand, when employing a high temperature, the bamboo powder can be treated in a short time and may also be treated with steam in some case.

When using water, the total amount of water to be added to the bamboo powder is within a range from 300 to 1000 parts by weight based on 100 parts by weight of the bamboo powder, and a proper method of appropriately repeating washing with stirring and hydro-extraction is employed. When using steam, the amount of water can also be reduced by using in combination with the above method of using hot water while maintaining the steamed state.

The bamboo powder is treated with hot water at 50°C or higher. When the bamboo powder is not subjected to this treatment, the resin composition obtained as described above is colored pale brown and causes strong burnt smell and mold contamination on injection molding. In addition to these disadvantages on molding, there also arises a disadvantages that a test solution is colored according to the amount of the bamboo powder to be added when the resin composition or molded article made of the resin composition is subjected to a test in a food packaging material defined in Notification No. 370 of the Welfare Ministry of Japan. Accordingly, the treated bamboo powder is preferably used after it was sufficiently hydro-extracted and dried.

The equilibrium water content of the bamboo powder is generally defined within a range from 14 to 16% by weight, but is preferably not more than 2% by weight, and more preferably from 1.0 to 2.0% by weight when employing the above various molding methods. Also in connection with the employment of a vented extruder, when using the powder with the water content of higher than 3% by weight, defects caused by generation of bubbles are found in the resulting molded article, while the above defects are not found in the case where the water content is not more than 2% by weight.

By the way, Japanese Patent Kokai Publication No. 134361/1996 does not disclose any pre-treatment with water in the present invention, and merely discloses a phenomenon referred usually to as "burning" wherein release of a large amount of water and decomposition product, fuming, etc. occur at about molding temperature in the presence of about 7% by weight of water in the bamboo powder, thereby causing appearance defects, deterioration of physical properties and reduction in commercial value, and asserts that blending of a basic filler is effective as a means for solving these problems.

Since the molded article of the present invention has an antibacterial activity, addition of an antibacterial agent and use of an antibacterial paint are not required. Furthermore, the molded article can be easily burned at low combustion calorie and produces less burning residue and, therefore, the molded article is useful in appliance parts, automotive parts, building material, kitchenware, container, tray, comb and grip of shaver and toothbrush, which are obtained by molding using the above molding method, because of its antibacterial activity.

### Examples

The following Examples further illustrate the present invention.

### Example 1

50% by weight of a polypropylene resin (manufactured by Grand Polymer Co. under the trade name of J3H) was sufficiently mixed with 50% by weight of a bamboo powder having an average particle diameter of 150 µm, obtained by roughly grinding thick-stemmed bamboo using a grinder, followed by fine grinding using a ball mill and further screening, and an antioxidant (manufactured by Nippon Geigy Co. under the trade name of Irganox 1076) in the amount of 0.5 parts by weight based on 100 parts by weight of the total amount of the polypropylene resin and bamboo powder by using a Henschel mixer, and then molten and pelletized at a preset temperature of 200°C by using an extruder with a vent (L/D: 28, cylinder inner diameter: 50 mm).

A plate having a length of 5 cm, a width of 7 cm and a thickness of 3 mm was obtained by injection molding of the above composition at a preset temperature of 200°C by using an injection molder FS-80 manufactured by Nissei Plastic Industrial Co., Ltd.

Using this plate, the antibacterial activity to Escherichia coli, Staphylococcus aureus and Escherichia coli O157 was evaluated. The evaluation of the antibacterial activity was conducted in the following procedure. That is, the surface of the above plate was sterilized with ethanol and 0.5 ml of a suspension of cells prepared by using a phosphate buffer was dropped on the surface, and then a sterilized polyethylene film was placed thereon. After the storage at 35°C for 24 hours, the surface of the plate was washed with sterilized phosphate buffer and the number of viable cells in the wash was measured by using an agar media for measurement of cell number in accordance with a dilution plate technique. As a control, a test using only a strain solution was carried out at the same time. The measurement was carried out three times and an average value thereof was taken as data. The measurement results are shown in Table 1.

In addition, defined test pieces were obtained by injection molding of this composition. The flexural modulus and heat distorsion temperature were measured. The measurement results are shown in Table 2.

### Example 2

In the same manner as in Example 1, except that 35% by weight of the polypropylene resin was mixed with 65% by weight of a thick-stemmed bamboo powder having an average particle diameter of 150 µm and an antioxidant (manufactured by Nippon Geigy Co. under the trade name of Irganox 1076) in the amount of 0.3 parts by weight based on 100 parts by weight of the total amount of the polypropylene resin and bamboo powder in Example 1, plates and test pieces were produced and the antibacterial activity and physical properties were evaluated.

The measurement results are shown in Table 1 and Table 2.

### Comparative Example 1

In the same manner as in Example 1, except that 85% by weight of the polypropylene resin was mixed with 15% by weight of the bamboo powder in Example 1, plates and test pieces were produced and the antibacterial activity and physical properties were evaluated.

The measurement results are shown in Table 1 and Table 2.

### Example 3

In the same manner as in Example 1, except that an ABS resin (manufactured by Mitsui Chemical Co. under the trade name of Santac UT-61) was used in place of the polypropylene resin in Example 1, plates and test pieces were produced and the antibacterial activity and physical properties were evaluated.

The measurement results are shown in Table 1 and Table 2.

### Example 4

In the same manner as in Example 1, except that an AS resin (manufactured by Mitsui Chemical Co. under the trade name of Litac-A 230PC) was used in place of the polypropylene resin in Example 1, plates and test pieces were produced and the antibacterial activity and physical properties were evaluated.

The measurement results are shown in Table 1 and Table 2.

### Example 5

In the same manner as in Example 1, except that 30% by weight of the bamboo powder was added to 70% by weight of a biodegradable resin made of polylactic acid (manufactured by Mitsui Chemical Co. under the trade name of RACEA H100J) was added in place of the polypropylene resin in Example 1, plates and test pieces were produced and the antibacterial activity and physical properties were evaluated.

The measurement results are shown in Table 1 and Table 2.

### Comparative Example 2

In the same manner as in Example 1, except that the bamboo powder was not added in Example 1, plates and test pieces were produced and the antibacterial activity and physical properties were evaluated.

The measurement results are shown in Table 1 and Table 2.

**Table 1**

| Samples | Resins | Content of bamboo powder (% by weight | Number of viable cells | | |
|---|---|---|---|---|---|
| | | | Escherichia coli | Staphylococcus aureus | Escherichia coli O157 |
| Example 1 | Polypro-. pylene | 50 | 5.2 × 10³ | Not detected | Not detected |
| Example 2 | Polypropylene | 65 | 4.8 × 10² | Not detected | Not detected |
| Comp. Example 1 | Polypropylene | 15 | 1.5 × 10⁶ | 2.4 × 10⁵ | 4.9 × 10⁶ |
| Example 3 | ABS resin | 50 | 3.1 × 10³ | Not detected | Not detected |
| Example 4 | AS resin | 50 | 9.3 × 10² | Not detected | Not detected |
| Example 5 | Polylactic acid | 30 | 1.8 × 10² | Not detected | Not detected |
| Comp. Example 2 | Polypropylene | 0 | 8.3 × 10⁶ | 1.7 × 10⁴ | 4.9 × 10⁶ |
| Control | - | - | 8.0 × 10⁸ | 2.8 × 10⁴ | 3.2 × 10⁶ |
| Initial number of cells | - | - | 1.7 × 10⁵ | 1.4 × 10³ | 7.0 × 10⁴ |
| [Note] Only a strain solution is used in a control. | | | | | |

**Table 2**

| Samples | Resins | Content of bamboo powder(% by weight) | Mechanical properties | |
|---|---|---|---|---|
| | | | Flexural modulus (MPa) | Heat distorsion temperature (°C) |
| Example 1 | Polypropylene | 50 | 3960 | 145 |
| Example 2 | Polypropylene | 65 | 5100 | 150 |
| Comp. Example 1 | Polypropylene | 15 | 2200 | 103 |
| Example 3 | ABS resin | 50 | 6800 | 106 |
| Example 4 | AS resin | 50 | 7670 | 115 |
| Example 5 | Polylactic acid | 30 | 5960 | 60 |
| Comp. Example 2 | Polypropylene | 0 | 1220 | 93 |
| Reference Example | ABS resin | 0 | 2450 | 85 |
| | AS resin | 0 | 3560 | 95 |
| | Polylactic acid | 0 | 3800 | 55 |
| (Note] Mechanical properties of the respective resins used in Examples 3 to 5 are shown. | | | | |

### Example 6

A tray having a length of about 300 mm, a width of about 300 mm and a thickness of about 3 mm was produced by injection molding of pellets of the composition described in Example 1. The molded article had good appearance and was substantially free from sink and warpage. Any of molding shrinkage factor in longitudinal and lateral directions was small such as about three-thousandth. A boiling test was carried out at 90°C for 1 hour and, as a result, deformation and shrinkage were rarely found and the molded article had a level enough to put in practical use.

Furthermore, test pieces were cut from the molded article and the antibacterial activity was evaluated according to the same manner as in Example 1. As a result, the same results as those in Example 1 were obtained.

Assuming its disposal, a burning test was carried out. As a result, a combustion calorie was small such as half of a combustion calorie (about 11000 kcal) that in the case where no bamboo powder is contained. That is, it was found that the molded article can be easily burned and a trace amount of the burning residue is produced and, furthermore, thermal disposal can be sufficiently conducted.

### Example 7

A knife was produced by injection molding of pellets of the composition described in Example 1 in the following procedure. That is, a metallic portion of the knife was placed in a mold and a grip portion was formed by injection molding of the molten composition, thereby to obtain a knife. The grip portion is a thick-wall product having an elliptic sectional shape (major axis: 3.5 cm, minor axis: 2.5 cm) and a length of about 12 cm, but has good appearance free from sinking. Using this molded article, the antibacterial activity was evaluated in the same manner as in Example 1. As a result, the same antibacterial activity as in Example 1 was obtained.

### Example 8

A grip of a toothbrush having a width of about 12 mm, a length of about 17 cm and a thickness of about 5 mm was obtained by injection molding of pellets of the composition described in Example 5.

Using this molded article, the antibacterial activity was evaluated in the same manner as in Example 5. As a result, the same antibacterial activity as in Example 5 was obtained.

A test for formation of the brushing portion was carried out. As a result, filling suitability was sufficient.

### Example 9

55% by weight of a polypropylene resin (manufactured by Grand Polymer Co. under the trade name of J3H), 5% by weight of polyolefin wax (manufactured by Mitsui Chemical Co. under the trade name of Hi-wax HEW2203A), 40% by weight of the bamboo powder used in Example 1 and an antioxidant (manufactured by Nippon Geigy Co. under the trade name of Irganox 1076) in the amount of 0.5 parts by weight based on 100 parts by weight of the total amount of the polyolefin wax and bamboo powder were sufficiently mixed by using a Henschel mixer, and then molten and pelletized at a preset temperature of 200°C by using an extruder with a vent (L/D: 28, cylinder inner diameter: 50 mm).

A sheet having a thickness of about 1 mm and a width of about 670 mm was obtained by extruding this composition at a preset temperature of 200°C by using an extruder having L/D of 30 and a cylinder inner diameter of 65 mm.

Using this sheet, the antibacterial activity was evaluated in the same manner as in Example 1. As a result, the same antibacterial activity as in Example 1 was obtained.

This sheet was heated to about 190°C and then formed in a vacuum to obtain a tray having a width of about 15 cm, a length of about 20 cm and a depth of about 10 mm and a cup having a diameter of about 5 cm and a depth of about 4 cm. Any of them had good wall thickness distribution. With respect to the cup, the heat-sealing characteristics were evaluated by using a top film made of polypropylene. As a result, the film could be easily heat-sealed and the obtained seal strength was almost the same as that of a container for fermented soybeans.

### Example 10

35% by weight of a polyacrylonitrile resin (manufactured by Mitsui Chemical Inc. under the trade name of Parex 4205), 65% by weight of the bamboo powder used in Example 1, and magnesium stearate and Irganox 1076 in each amount of 1 part by weight based on 100 parts by weight of the total amount of the polyacrylonitrile and bamboo powder were mixed by using a Henschel mixer, and then formed into a sheet by the calendering method.

Using L-type calender rolls, i.e. first mixing roll at 150°C, second mixing roll at 150°C and calender roll at 180°C, a sheet having a width of about 1000 mm and a thickness of about 0.5 mm was obtained. The sheet had good appearance and abnormality was not found by visual inspection.

This sheet was heated to a temperature of 130°C and then formed in a vacuum to obtain a tray having a length of about 150 mm, a width of about 200 mm and a depth of about 30 mm. The molded article has good wall thickness distribution and is suited for practical use.

A plate was obtained by cutting this sheet into pieces having a length of about 2000 mm, superposing ten pieces each other, sandwiching them between steel plates plated with chrome, putting in a hot press, heating at a temperature of 90°C under a pressure of 30 kg/cm² for about 10 minutes, increasing the pressure to 120 kg/cm², hot-pressing at 150°C for 30 minutes, and cooling to about 40°C with applying the pressure. The resulting plate had good surface luster and uniform thickness.

This plate could be cut easily by using a cutter for steel plate (shearing) and its cut surface was good. Furthermore, cutting by a saw and driving of a nail could be carried out, like wooden products. Using this plate, the antibacterial activity was evaluated in the same manner as in Example 2. As a result, the same antibacterial activity as in Example 2 was obtained.

### Example 11

A bamboo powder was prepared by using a method of mixing 100 parts by weight of a long-jointed bamboo powder having an average particle diameter of 150 µm, obtained by roughly grinding long-jointed bamboo using a grinder, followed by fine grinding using a ball mill and further screening, with 500 parts by weight of hot water at 75°C with stirring, maintaining for 10 minutes, dehydrating under pressure and hot-air drying thereby to reduce the water content to 2% or less.

Then, 60% by weight of a polypropylene resin (manufactured by Grand Polymer Co. under the trade name of J3H) was sufficiently mixed with 40% by weight of the above bamboo powder, 2 parts by weight of polyolefin wax (manufactured by Mitsui Chemical Co. under the trade name of Hi-wax HEW2203A) and an antioxidant (manufactured by Nippon Geigy Co. under the trade name of Irganox 1076) in the amount of 0.5 parts by weight based on 100 parts by weight of the total amount of the polypropylene and bamboo powder by using a Henschel mixer, and then molten and pelletized at a preset temperature of 200°C by using an extruder with a vent (L/D: 28, cylinder inner diameter: 50 mm).

Tray-shaped molded articles having a length of 5 cm, a width of 10 cm, a depth of 1 cm and a thickness of about 1 mm, Izod impact test pieces and flexural modulus test pieces were respectively obtained by injection molding of this resin at 200°C using an injection molder FS-80 manufactured by Nissei Plastic Industrial Co., Ltd.

The resulting resin composition and molded article caused small change in color hue, and gave out less burnt smell. After samples were made from the molded article, the combustion calorie was measured by using a Tsunen labo. Type automatic bomb calorimeter CA-3P (manufactured by Shimadzu Corp.) and the test described in Notification No. 370 of the Welfare Ministry of Japan was carried out. Using the resulting test pieces, the Izod impact strength and flexural modulus were respectively measured in accordance with the standard defined in JIS K7110 and K7203. The results are shown in Table 3.

Using the resulting molded article, the antibacterial activity was evaluated in the same manner as in Example 1. As a result, the same antibacterial activity as in Example 1 was obtained.

### Example 12

In the same manner as in Example 11, except that the bamboo powder was treated with hot water at 55°C for 15 minutes in Example 11, a resin composition and a molded article were obtained. The results are shown in Table 3.

### Example 13

In the same manner as in Example 11, except that 70% by weight of the polypropylene resin was mixed with 30% by weight of the bamboo powder having an average particle diameter of 150 µm obtained by treating with hot water at 75°C for 10 minutes and sufficiently drying in Example 11, a resin composition and a molded article were obtained. The results are shown in Table 3.

### Example 14

30% by weight of a polyethylene resin (manufactured by Mitsui Chemical Co. under the trade name of Mirason 50W) was sufficiently mixed with 70% by weight of a bamboo powder having an average particle diameter of 150 µm, obtained by treating with hot water at 75°C for 10 minutes and sufficiently drying, and polyolefin wax (manufactured by Mitsui Chemical Co. under the trade name of Hi-wax HW2203A) in the amount of 4 parts by weight based on 100 parts by weight of the total amount of the polyethylene and bamboo powder by using a Henschel mixer, and then molten and pelletized at a preset temperature of 200°C by using an extruder with a vent (L/D: 28, cylinder inner diameter: 50 mm).

Using the resulting resin composition, each evaluation was carried out in the same manner as in Example 11. The evaluation results are shown in Table 3.

### Reference Examples 1 to 2

In the same manner as in Examples 11 and 14, except that no bamboo powder was added in Examples 11 and 14, test pieces were made and the burning test, test described in Notification No. 370 of the Welfare Ministry, Izod impact test and flexural modulus test were carried out, respectively. The results are shown in Table 3.

### Reference Example 3

In the same manner as in Example 11, except that a bamboo powder free from a hot water treatment was used in Example 11, a resin composition and a molded article were obtained. The results are shown in Table 4.

The resulting resin composition and molded article were colored brown and gave out slightly strong burnt smell.

The combustion calorie of the resulting resin composition and molded article was the same as in Example 11, but the extraction solution was changed to brown in the test described in Notification No. 370 of the Welfare Ministry of Japan and, therefore, it was impossible to apply it to the test.

### Reference Example 4

In the same manner as in Example 11, except that the bamboo powder was treated with hot water at 45°C for 30 minutes in Example 11, a resin composition and a molded article were obtained. The results are shown in Table 4.

### Reference Example 5

In the same manner as in Example 14, except that 15% by weight of a polyethylene resin (manufactured by Mitsui Chemical Co. under the trade name of Mirason 50W) was mixed with 85% by weight of the bamboo powder having an average particle diameter of 150 µm obtained by treating with hot water at 75°C for 10 minutes and sufficiently drying in Example 14, a resin composition was obtained. However, it was very difficult to pelletize the resin composition and to obtain a good molded article, resulting in very large scatter in values of physical properties. The evaluation results are shown in Table 4.

**Table 3**

| Evaluation items | Unit s | Example 11 | Example 12 | Example 13 | Example 14 | Reference Example 1 J3H | Reference Example 2 50W |
|---|---|---|---|---|---|---|---|
| Color hue | - | Good | Good | Good | Good | Good | Good |
| Smell | - | Good | Good | Good | Good | Good | Good |
| Combustion calorie | Cal/g | 6000 | 6000 | 7000 | 5500 | 10000 | 10500 |
| Notification No. 370 test | - | Compatible | Compatible | Compatible | - | Compatible | Compatible |
| Impact test | KJ/m² | 2.3 | 2.4 | 2.5 | 4.6 | 1.7 | Not broken |
| Flexural modulus | Mpa | 4000 | 4000 | 3500 | 670 | 1300 | 180 |

**Table 4**

| Evaluation items | Units | Reference Example 3 | Reference Example 4 | Reference Example 5 |
|---|---|---|---|---|
| Color hue | - | Poor | Good | Good |
| Smell | - | Poor | Poor | Good |
| Combustion calorie | Cal/g | 6000 | 6000 | 5000 |
| Notification No. 370 test | - | Imcompatible | Imcompatible | - |
| Impact test | KJ/m² | 2.3 | 2.2 | - |
| Flexural modulus | Mpa | 4000 | 4000 | - |

## Claims

1. A molded article having an antibacterial activity, characterized in that said molded article is obtained by thermoforming a composition comprising a non-halogenated thermoplastic resin and a bamboo powder, said bamboo powder being contained in an amount of 20 to 80% by weight.

2. The molded article according to claim 1, wherein the thermoforming of the composition is injection molding, extrusion molding or calender molding, or vacuum, air-pressure or press forming of a sheet-like product obtained by extrusion or calender molding.

3. The molded article according to claim 1, wherein the molded article includes light electrical parts, particularly an air-conditioner fan, cleaner air plenum parts or refrigerator vegetable chamber parts.

4. The molded article according to claim 1, wherein the molded article includes automotive parts, particularly an air-conditioner fan, air-conditioner duct or air plenum parts.

5. The molded article according to claim 1, wherein the molded article is a building material.

6. The molded article according to claim 1, wherein the molded article is a tray for foods, cup, lunch box or lid thereof, a plate for display or a tray.

7. The molded article according to claim 1, wherein the molded article is a kitchenware, particularly a grip or handle of a cookware.

8. The molded article according to claim 1, wherein the molded article is a comb, a grip of shaver, toothbrush or a grip of a surgical knife.

9. The molded article according to any one of claims 1 to 8, wherein the bamboo powder has an average particle diameter within a range from 5 to 500 µm.

10. The molded article according to any one of claims 1 to 9, wherein the bamboo powder, which constitutes the composition comprising the non-halogenated thermoplastic resin and the bamboo powder, said bamboo powder being contained in the amount of 20 to 80%, is a bamboo powder treated with hot water at 50°C or higher and particularly dried until the content of water is reduced to 2% by weight or lower.

11. The molded article according to any one of claims 1 to 10, wherein the non-halogenated thermoplastic resin is polypropylene, polyethylene, ABS resin, AS resin or polylactic acid.

12. A mixed composition comprising 20 to 80% by weight of a bamboo powder having an average particle diameter of 5 to 500 µm, obtained by treating with hot water at 50°C or higher and drying until the content of water is reduced to 2% by weight or lower, and 80 to 20% by weight of a non-halogenated thermoplastic resin.

13. A method of producing a molded article having an antibacterial activity, which comprises thermoforming a composition comprising a non-halogenated thermoplastic resin and a bamboo powder, said bamboo powder being contained in the amount of 20 to 80% by weight.
